# EUROPEAN PATENT APPLICATION

(11) **EP 1 188 607 A2**
(43) Date of publication of application: **20.03.2002**
(21) Application number: 01307432.3
(22) Date of filing: 31.08.2001
(51) Int. Cl.: B60N 2/36

(54) **Seating system for a vehicle having a cargo compartment**

(30) Priority: 13.09.2000 US 660618
(71) Applicant: Johnson Controls Technology Company, Plymouth, Michigan 48170 (US)
(72) Inventor: Xiromeritis, Nick, Southfield, Michigan 48034 (US); Clark, Marc, Burscheid 51399 (DE); Jaeger, David, Koln 50939 (DE); Karacsonyi, Tamas, Wuppertal 42289 (DE)
(74) Representative: Dealtry, Brian

(57) **Abstract**

A seating system for a vehicle that includes a seat back, a cargo panel, and a seat bottom. The seat back is connectable to the vehicle for movement between a passenger position and a cargo position. The seat back is displaced in a forward direction in the cargo position relative to the passenger position to increase the compartment volume of the cargo compartment. The cargo panel is connectable to the vehicle for movement between a retracted position and an extended position. The cargo panel is displaced in the forward direction in the extended position relative to the retracted position to increase the floor space of the cargo compartment. The seat bottom is connectable to the vehicle for movement between a passenger position and a cargo position to allow movement of the seat back from the passenger position to the cargo position.

## Description

### TECHNICAL FIELD OF THE INVENTION

This invention generally relates to seating systems. More specifically, this invention relates to seating systems having a passenger position and a cargo position to increase the compartment volume of the cargo compartment.

### BACKGROUND OF THE INVENTION

With an ever increasing pressure from automotive consumers, flexibility and adaptability of vehicle interiors is increasingly required in order to provide a vehicle adapted to meet the broad consumer demand. Further, with increased social awareness of a vehicle's impact on the environment, there is an increasing demand to minimize the overall mass of the vehicle while still meeting the feature requirements of the consumer. One of these demands of the consumer is the ability of the vehicle to carry passengers during some situations and to maximize cargo room during other situations. Some attempts to meet this demand have included the use of folding rear seat assemblies. These attempts, however, can only provide limited cargo room.

### SUMMARY OF THE INVENTION

Briefly, the invention includes a seating system for a vehicle that includes a seat back, a cargo panel, and a seat bottom. The seat back is connectable to the vehicle for movement between a passenger position and a cargo position. The seat back is displaced in a forward direction in the cargo position relative to the passenger position to increase the compartment volume of the cargo compartment. The cargo panel is connectable to the vehicle for movement between a retracted position and an extended position. The cargo panel is displaced in the forward direction in the extended position relative to the retracted position to increase the floor space of the cargo compartment. The seat bottom is connectable to the vehicle for movement between a passenger position and a cargo position to allow movement of the seat back from the passenger position to the cargo position. Accordingly, this invention provides for a seating system which overcomes the problems and disadvantages of the conventional techniques in the art. The invention also provides for a seating system that increases the compartment volume and the floor space of the cargo compartment.

### BRIEF DESCRIPTION OF THE DRAWINGS

Further features and advantages of the invention will become apparent from the following discussion and accompanying drawings, in which:
FIG. 1 is a front view of the seating system of the preferred embodiment of the invention;
FIG. 2 is a rear view of the seating system of FIG. 1;
FIG. 3 is a side view of the seating system of FIG. 1, shown in the passenger position;
FIG. 4 is a side view of the seating system of FIG. 1, shown in a transitional position; and
FIG. 5 is a side view of the seating system of FIG. 1, shown in the cargo position.

### DETAILED DESCRIPTION OF THE PREFERRED EMBODIMENT

The following description of the preferred embodiment is merely exemplary in nature, and is in no way intended to limit the invention or its application or uses.

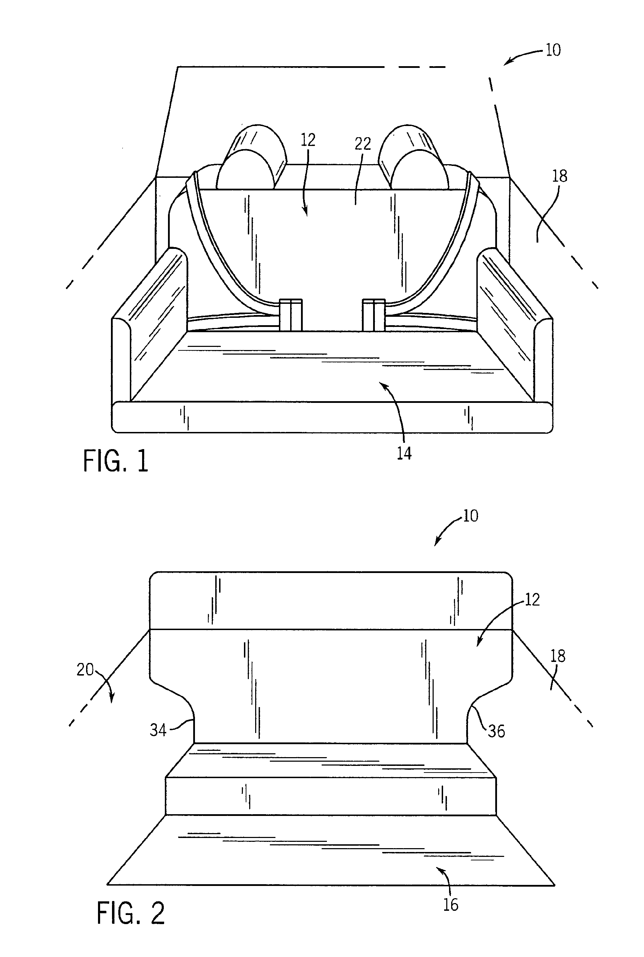

As shown in FIGS. 1 and 2, the seating system 10 of the invention includes a seat back 12, a seat bottom 14, and a cargo panel 16. The seating system 10 is preferably used as the rear seats of a vehicle 18 having a cargo compartment 20, but may alternatively be used as the front seats or the middle seats of a vehicle with or without a cargo compartment. The seating system 10 preferably includes two or more seating surfaces integrally designed as a so-called bench seat, but may alternatively include seating surfaces individually designed as so-called captain chairs.

The seat back 12 and the seat bottom 14 preferably include a structural frame (not shown), a foam core (not shown), and a trim cover 22. These elements are made from conventional materials and with conventional methods. The seat back 12 and the seat bottom 14, however, may alternatively include other suitable elements, and may alternatively be made from other suitable materials or with other suitable methods.

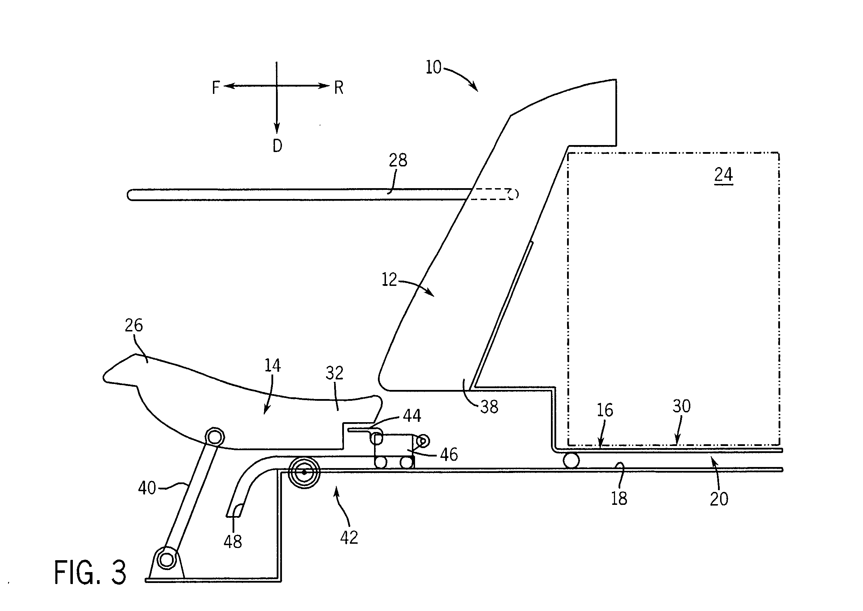

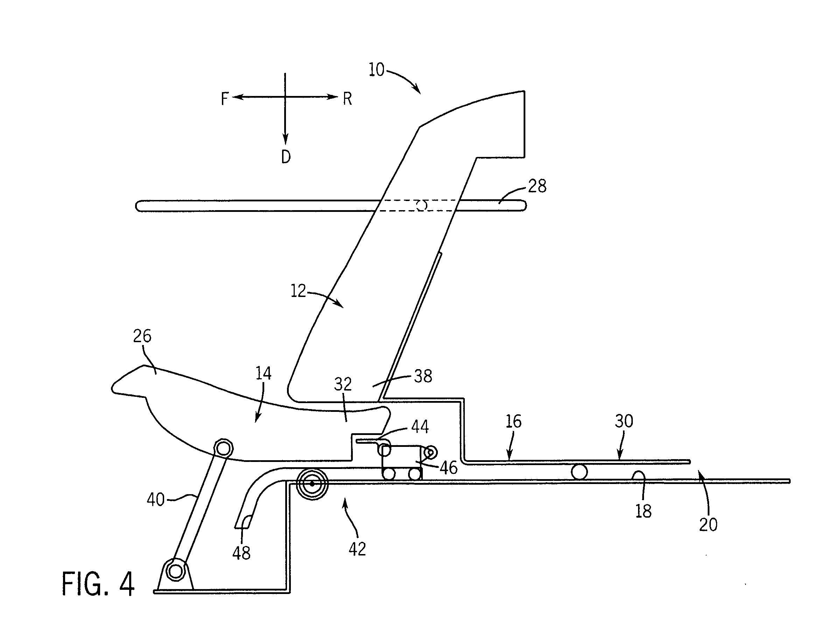

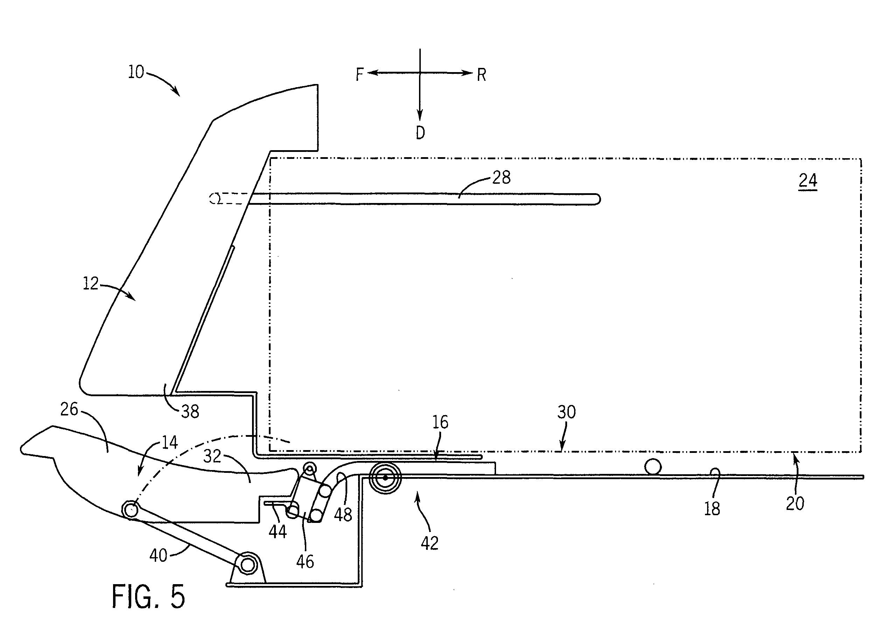

As shown in FIGS. 3-5, the seat back 12 is connectable to the vehicle 18 for movement between a passenger position (shown in FIG. 3) and a cargo position (shown in FIG. 5). The seat back 12 is preferably displaced in a forward direction F in the cargo position relative to the passenger position to increase the compartment volume 24 of the cargo compartment 20. In the cargo position (shown in FIG. 5), the seat back 12 is preferably located over a forward portion 26 of the seat bottom 14, which dramatically increases the compartment volume 24 of the cargo compartment 20 behind the seating system 10. When the seating system 10 of the invention is used as the rear seats of a mini-van or sport utility truck with three rows of passenger seating and a small cargo compartment 20 behind the rear seats, moving the seat back 12 into the cargo position will increase the compartment volume 24 of the cargo compartment 20 by approximately 300%. The exact percent of the increase, of course, will be determined by several factors, including the original size of the cargo compartment 20 and the forward displacement of the seat back 12.

The seat back 12 preferably remains generally vertical during movement from the passenger position to the cargo position, but may alternatively rotate or pivot during this movement. The seat back 12 is preferably connected to the vehicle 18 by a guide track 28, but may alternatively be connected to the vehicle 18 by other suitable devices, such as links and rollers. The guide track 28, or any other suitable element, may include a latch mechanism or stop member to hold the seat back 12 in the passenger position or the cargo position.

The cargo panel 16 is connectable to the vehicle 18 for movement between a retracted position (shown in FIG. 3) and an extended position (shown in FIG. 5). The cargo panel 16 is preferably displaced in the forward direction F in the extended position relative to the retracted position to increase the floor space 30 of the cargo compartment 20. In the extended position (shown in FIG. 5), the cargo panel 16 is preferably located over a rearward portion 32 of the seat bottom 14, which dramatically increases the floor space 30 of the cargo compartment 20. When the seating system 10 of the invention is used as the rear seats of a mini-van or sport utility truck with three rows of passenger seating and a small cargo compartment 20 behind the rear seats, the cargo panel 16 into the extended position will increase the floor space 30 of the cargo compartment 20 by approximately 300%. The exact percentage of the increase, of course, will be determined by several factors, including the original area of the cargo floor and the forward displacement of the cargo panel 16.

The cargo panel 16 preferably remains generally level during movement from the retracted position to the extended position, but may alternatively rotate or pivot during this movement. The cargo panel 16, which preferably spans from a first outboard edge 34 of the seat back 12 to a second outboard edge 36 of the seat back 12 (as shown in FIG. 2), extends in a downward direction D and in a rearward direction R from a lower end 38 of the seat back 12. The cargo panel 16 is preferably fastened to the seat back 12 by a suitable device, but may alternatively be formed as an integral part of the structural frame (not shown) of the seat back 12. The cargo panel 16 may alternatively be connected to the vehicle with other suitable devices, such as tracks, links, or rollers. The cargo panel 16 preferably includes a stepped portion, which provides clearance of the other elements of the seating system 10, but may alternatively include other geometries. The cargo panel 16 is preferably made from a stiff and lightweight material, such as a plastic material or an aluminum material, but may alternatively be made from other suitable materials.

The seat bottom 14 is connected to the vehicle 18 for movement between a passenger position (shown in FIG. 3) and a cargo position (shown in FIG. 5). The seat bottom 14 is preferably displaced in the forward direction F and in the downward direction D in the cargo position relative to the passenger position to allow movement of the seat back 12 from the passenger position to the cargo position. The seat bottom 14 may alternatively be displaced in either the forward direction F or the downward direction D for this purpose.

The seat bottom 14 preferably remains generally horizontal during movement from the passenger position to the cargo position, but may alternatively rotate or pivot during this movement. The seat bottom 14 is preferably connected to the vehicle 18 by a front link 40 and a track assembly 42. The front link 40, which preferably connects to the forward portion 26 of the seat bottom 14, is preferably made from a stiff material, such as steel, but may alternatively be made from other suitable materials. The rear track, which preferably connects to a rearward portion 32 of the seat bottom 14, preferably includes a pivot arm 44, a guide member 46, and an arcuate track 48. These elements of the track assembly 42 cooperate to guide the rearward portion 32 of the seat bottom 14 in the forward direction F and in the downward direction D from the passenger position to the cargo position. The arcuate track 48, or any other suitable element, may include a latch mechanism or a stop member to hold the seat bottom 14 in the passenger position or the cargo position. The pivot arm 44, the guide member 46, and the arcuate track 48 are preferably made from conventional materials and with conventional methods, but may alternatively be made from other suitable materials and with other suitable methods. The track assembly 42 may alternatively include other suitable devices for this purpose. Furthermore, the seat bottom 14 may alternatively include other suitable devices to allow movement from the passenger position to the cargo position, such as a forward link and a rearward link of a four-bar linkage, or a front track and a rear track of a double track assembly.

The foregoing discussion discloses and describes a preferred embodiment of the invention. One skilled in the art will readily recognize from such discussion, and from the accompanying drawings and claims, that changes and modifications can be made to the invention without departing from the true spirit and fair scope of the invention as defined in the following claims.

## Claims

1. A seating system for a vehicle having a cargo compartment, said seating system comprising:
a seat back connectable to the vehicle for movement between a passenger position and a cargo position, said seat back being displaced in a forward direction in the cargo position relative to the passenger position to increase the compartment volume of the cargo compartment; and
a cargo panel connectable to the vehicle for movement between a retracted position and an extended position, said cargo panel being displaced in the forward direction in the extended position relative to the retracted position to increase the floor space of the cargo compartment.

2. The seating system of Claim 1 wherein said seat back remains generally vertical during movement from the passenger position to the cargo position.

3. The seating system of Claim 1 wherein said cargo panel extends from a lower end of said seat back.

4. The seating system of Claim 1 wherein said cargo panel spans from a first outboard edge of said seat back to a second outboard edge of said seat back.

5. The seating system of Claim 1 wherein said cargo panel is located over a rearward portion of said seat bottom in the extended position.

6. The seating system of Claim 1 further comprising seat bottom connectable to the vehicle for movement between a passenger position and a cargo position to allow movement of said seat back from the passenger position to the cargo position.

7. The seating system of Claim 6 wherein said seat back is located over a forward portion of said seat bottom in the cargo position.

8. The seating system of Claim 6 wherein said seat bottom is displaced in the forward direction in the cargo position relative to the passenger position.

9. The seating system of Claim 6 wherein said seat bottom is displaced in a downward direction in the cargo position relative to the passenger position.

10. The seating system of Claim 6 wherein said seat bottom is displaced in the forward direction and in a downward direction in the cargo position relative to the passenger position.

11. The seating system of Claim 6 wherein said seat bottom remains generally horizontal during movement from the passenger position to the cargo position.

12. The seating system of Claim 6 further comprising a front link connected to a forward portion of said seat bottom and connectable to the vehicle.

13. The seating system of Claim 6 further comprising a track assembly connected to a rearward portion of said seat bottom and connectable to the vehicle.

14. A seating system for a vehicle having a cargo compartment, said seating system comprising:
a seat back connectable to the vehicle for movement between a passenger position and a cargo position, said seat back being displaced in a forward direction in the cargo position relative to the passenger position to increase the compartment volume of the compartment; and
a seat bottom connectable to the vehicle for movement between a passenger position and a use position, said seat bottom being displaced to allow movement of said seat back from the passenger position to the cargo position.

15. The seating system of Claim 14 wherein said seat back remains generally vertical during movement from the passenger position to the cargo position.

16. The seating system of Claim 14 wherein said cargo panel is located over a rearward portion of said seat bottom in the extended position.

17. The seating system of Claim 14 wherein said seat back is located over a forward portion of said seat bottom in the cargo position.

18. The seating system of Claim 14 wherein said seat bottom is displaced in the forward direction in the cargo position relative to the passenger position.

19. The seating system of Claim 14 wherein said seat bottom is displaced in a downward direction in the cargo position relative to the passenger position.

20. The seating system of Claim 14 wherein said seat bottom is displaced in the forward direction and in a downward direction in the cargo position relative to the passenger position.

21. The seating system of Claim 14 wherein said seat bottom remains generally horizontal during movement from the passenger position to the cargo position.

22. The seating system of Claim 14 further comprising a front link connected to a forward portion of said seat bottom and connectable to the vehicle.

23. The seating system of Claim 14 further comprising a track assembly connected to a rearward portion of said seat bottom and connectable to the vehicle.

24. A method for increasing the floor space of a cargo compartment of a vehicle, comprising:
connecting a seat back to the vehicle for movement between a passenger position and a cargo position;
connecting a cargo panel to the vehicle for movement between a retracted position and an extended position;
displacing the seat back in a forward direction from the passenger position to the cargo position and displacing the cargo panel in the forward direction from the retracted position to the extended position to increase the floor space of the cargo compartment.

25. The method of Claim 24 further comprising connecting a seat bottom to the vehicle for movement between a passenger position and a cargo position; and displacing the seat bottom to allow movement of the seat back from the passenger position to the cargo position.

26. The method of Claim 25 wherein said displacing the seat bottom includes displacing the seat bottom in the forward direction from the passenger position to the cargo position.

27. The method of Claim 25 wherein said displacing the seat bottom includes displacing the seat bottom in a downward direction from the passenger position to the cargo position.

28. The method of Claim 25 wherein said displacing the seat bottom includes displacing the seat bottom in the forward direction and in a downward direction from the passenger position to the cargo position.
